(19) Europäisches Patentamt
European Patent Office
Office européen des brevets

(11) Veröffentlichungsnummer : **0 061 679**
**B1**

(12) # EUROPÄISCHE PATENTSCHRIFT

(45) Veröffentlichungstag der Patentschrift : **28.08.85**

(51) Int. Cl.⁴ : **C 07 F 9/24**, A 01 N 57/28

(21) Anmeldenummer : **82102313.2**

(22) Anmeldetag : **20.03.82**

(54) **N-sulfonylierte Thiolphosphoresteramide, Verfahren zu ihrer Herstellung und ihre Verwendung zur Bekämpfung von Schädlingen.**

(30) Priorität : **27.03.81 DE 3112064**

(43) Veröffentlichungstag der Anmeldung : **06.10.82 Patentblatt 82/40**

(45) Bekanntmachung des Hinweises auf die Patenterteilung : **28.08.85 Patentblatt 85/35**

(84) Benannte Vertragsstaaten : **AT BE CH DE FR GB IT LI LU NL SE**

(56) Entgegenhaltungen :
**DE-A- 2 157 345**
**DE-A- 2 248 799**
**DE-A- 2 642 054**
**DE-A- 2 741 085**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Loeffler, Hans-Peter, Dr.**
**Sinsheimer Strasse 42**
**D-6700 Ludwigshafen (DE)**
Erfinder : **Seufert, Walter, Dr.**
**Bruesseler Ring 28**
**D-6700 Ludwigshafen (DE)**
Erfinder : **Adolphi, Heinrich, Dr.**
**Kalmitweg 11**
**D-6703 Limburgerhof (DE)**

EP 0 061 679 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft N-sulfonylierte Thiolphosphoresteramide, Verfahren zu ihrer Herstellung, insektizide, akarizide und nematizide Mittel, die diese Verbindungen als Wirkstoffe enthalten, sowie Verfahren zur Bekämpfung von Insekten, Spinnentieren und Nematoden.

N-sulfonylierte Thiolphosphoresteramide mit insektizider, akarizider und nematizider Wirkung sind u. a. aus der DE-OS 2 642 054 bekannt.

Es wurde gefunden, daß N-sulfonylierte Thiolphosphoresteramide der Formel

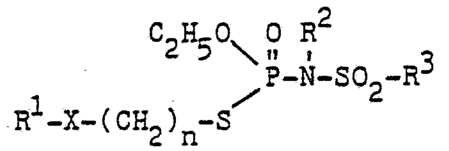

(I)

in der

$R^1$ Alkyl mit 1 bis 3 Kohlenstoffatomen,

$R^2$ Alkyl oder Alkenyl mit bis zu 6 Kohlenstoffatomen,

$R^3$ Alkyl oder Halogenalkyl mit 1 bis 6 Kohlenstoffatomen oder Dialkylamino mit 1 bis 6 Kohlenstoffatomen in einer Alkylgruppe,

X Sauerstoff oder Schwefel und

n 1 oder 2 bedeuten,

eine außergewöhnlich starke insektizide, akarizide und nematizide Wirksamkeit besitzen und bekannten N-sulfonylierten Thiolphosphoresteramiden in ihrer Wirkung überlegen sind.

Sie zeigen insbesondere eine gute Wirkung gegen Raupen, Chagaswanzen und Spinnmilben.

Als Alkylreste für $R^1$, $R^2$ und $R^3$ in Formel I kommen unverzweigte und verzweigte Reste mit bis zu 3 bzw. 6 Kohlenstoffatomen in Betracht, beispielsweise Methyl, Ethyl, n-Propyl oder i-Propyl für $R^1$, $R^2$ oder $R^3$ sowie außerdem n-Butyl, i-Butyl, n-Pentyl oder i-Hexyl für $R^2$ oder $R^3$. $R^3$ kann außerdem einen Halogenalkylrest mit bis zu 6 Kohlenstoffatomen, wie Chlormethyl, Bromethyl, 2-Chlorethyl, 2-Brommethyl, 3-Chlor-n-propyl, 4-Chlor-n-butyl, 1-Methyl-2-chlor-n-propyl, 1-Chlormethyl-ethyl, insbesondere Chlormethyl, oder einen Dialkylaminorest mit 1 bis 6 Kohlenstoffatomen in einer Alkylgruppe, wie Dimethylamino, Diethylamino, Diisopropylamino, Methylethylamino bedeuten.

Man erhält die N-sulfonylierten Thiolphosphoresteramide der Formel I durch Umsetzung von

a) einem Phosphoramidothioatsalz der allgemeinen Formel

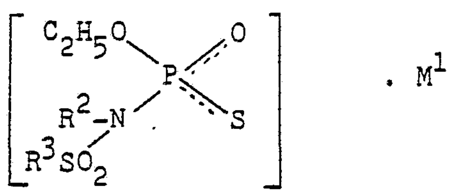

(II)

in der $R^2$ und $R^3$ die oben angegebenen Bedeutungen haben und $M^1$ ein Alkalimetallion, oder eine Ammoniumgruppe bedeutet, mit einem Alkylierungsmittel der Formel

$$R^1{-}X{-}(CH_2)_n{-}Y \qquad \text{(III)}$$

in der $R^1$, X und n die oben genannten Bedeutungen haben und Y Halogen oder eine Sulfonsäuregruppe bedeutet, oder

b) einem Thiophosphorylhalogenid der Formel

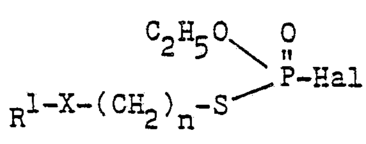

(IV)

in der $R^1$, X und n die oben angegebenen Bedeutungen haben und Hal Halogen, vorzugsweise Chlor, bedeutet, mit einem Sulfonylamidsalz der Formel

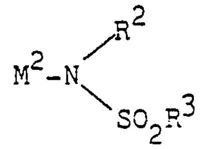

(V)

in der $R^2$ und $R^3$ die oben angegebenen Bedeutungen haben und $M^2$ ein Alkalimetall, vorzugsweise Natrium oder Kalium, ist.

Als Alkalimetalle für $M^1$ in Formel II kommen beispielsweise Natrium oder Kalium in Betracht. Unter einer Ammoniumgruppe für $M^1$ sind außer dem Ammoniumion Di- oder Trialkylammoniumionen, wie Dimethylammonium, Trimethylammonium oder Triethylammonium, oder das Pyridiniumion zu verstehen.

Als Sulfonsäuregruppen für Y in Formel III kommen beispielsweise die Benzolsulfonat-, p-Toluolsulfonat-, Monoethylsulfonat-, Monobromsulfonat oder die Mono-sec.-butylsulfonatgruppe in Betracht.

Das in der Verfahrensvariante a) als Ausgangsstoff verwendete Phosphoramidothioatsalz der Formel II kann durch Umsetzung eines Phosphoramidothioates der Formel

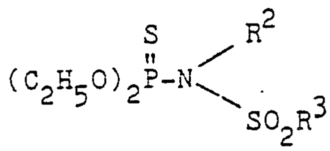

(VI)

in der $R^2$ und $R^3$ die oben angegeben Bedeutungen haben, mit einem Dealkylierungsmittel der Formel

$$R^4SM^1 \qquad \text{(VII)}$$

hergestellt werden. In Formel VII hat $M^1$ die oben angegebene Bedeutung und $R^4$ steht für Wasserstoff, Alkyl, vorzugsweise mit 1 bis 4 Kohlenstoffatomen, oder Alkoxythiocarbonyl, wie Methoxythiocarbonyl oder Ethoxythiocarbonyl.

Beispiele für die Phosphoramidothioatsalze der Formel II sind Kalium-O-ethyl-N-methyl-N-methansulfonyl-phosphoramidothioat, Kalium-O-ethyl-N-methyl-N-ethansulfonylphosphoramidothioat, Kalium-O-ethyl-N-methyl-N-(dimethylsulfamyl)-phosphoramidothioat, Kalium-O-ethyl-N-ethyl-N-methansulfonylphosphoramidothioat, Kalium-O-ethyl-N-isopropyl-N-methansulfonyl-phosphoramidothioat, Kalium-O-ethyl-N-isopropyl-N-(dimethylsulfamyl)-phosphoramidothioat und die entsprechenden Natrium-, Triethylammonium, Dimethylanilin- oder Pyridiniumsalze.

Beispiele für Alkylierungsmittel der Formel III sind Chlormethylmethylsulfid, Chlormethylethylsulfid, 2-Chlorethylmethylsulfid, 2-Chlorethylethylsulfid, 2-Chlorethylisopropylsulfid, 2-Chlorethylmethylether, 2-Chlorethylethylether, 2-Chlorethylisopropylether oder die entsprechenden Bromide, Benzolsulfonate und p-Toluolsulfonate, sowie Ethylsulfat, Diethylsulfat, Butylsulfat, Dibutylsulfat, sec.-Butylsulfat und Di-sec.-butylsulfat.

Beispiele für Phosphoramidothioate der Formel VI sind O,O-Diethyl-N-methyl-N-methansulfonyl-phosphoramidothioat, O,O-Diethyl-N-methyl-N-ethan-sulfonylphosphoramidothioat, O,O-Diethyl-N-methyl-N-(dimethyl-sulfamyl)phosphoramidothioat, O-O-Diethyl-N-isopropyl-N-methan-sulfonylphosphoramidothioat und O,O-Diethyl-N-isopropyl-N-(dimethyl-sulfamyl)phosphoramidothioat.

Beispiele für Dealkylierungsmittel der Formel VII sind Natriumhydrogensulfid, Kaliumhydrogensulfid, Natriummethanthiolat, Kaliumethanthiolat, Kaliummethylxanthogenat, Kaliumethylxanthogenat und Ammoniumsulfid.

Die Verfahrensvariante a) kann durch folgendes Reaktionsschema wiedergegeben werden :

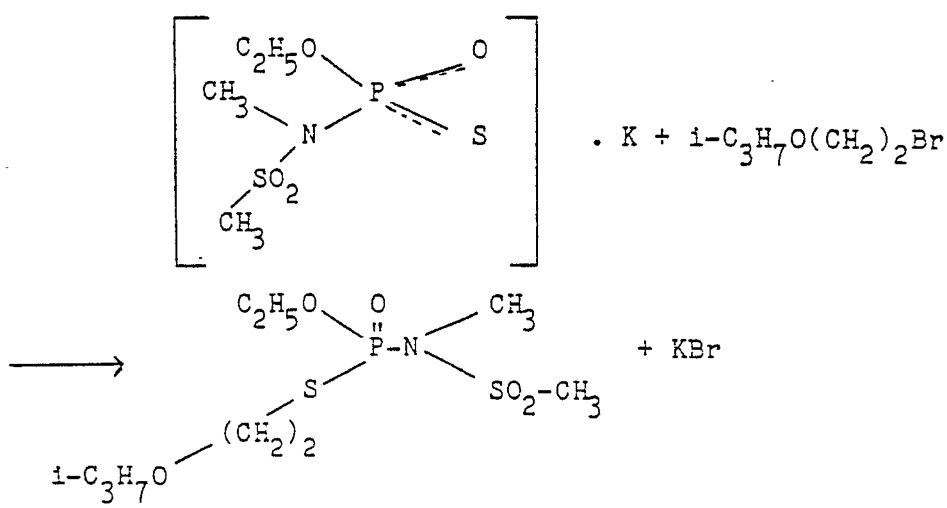

Die Umsetzung a) zur Herstellung der Verbindungen der Formel I wird vorzugsweise in Gegenwart eines Lösungs- oder Verdünnungsmittels durchgeführt. Beispiele für derartige Lösungs- oder Verdünnungsmittel sind Wasser und inerte organische Lösungsmittel, wie aliphatische, alicyclische und aromatische Kohlenwasserstoffe, die gegebenenfalls chloriert sind, z. B. Hexan, Cyclohexan, Petrolether, Ligroin, Benzol, Toluol, Xylol, Methylenchlorid, Chloroform, Tetrachlorkohlenstoff, Ethylenchlorid, Trichlorethylen und Chlorbenzol, acyclische und cyclische Ether, z. B. Diethylether, Methylethylether, Diisopropylether, Dibutylether, Propylenoxid, Dioxan und Tetrahydrofuran ; Ketone, wie Aceton, Methylethylketon, Methyliospropylketon und Methylisobutylketon ; Nitrile, z. B. Acetonitril, Propionitril und Acrylnitril ; Alkohole, z. B. Methanol, Ethanol, Isopropanol, tert.-Butanol und Ethylenglykol ; Ester, z. B. Ethylacetat und Amylacetat ; Säureamide und Sulfoxide, z. B. Dimethylsulfoxid und Dimethylsulfon, und Basen, z. B. Pyridin.

Die Umsetzung gemäß a) verläuft innerhalb eines weiten Temperaturbereichs. Im allgemeinen wird das Verfahren innerhalb eines Temperaturbereiches von − 20 °C bis zum Siedepunkt des Gemisches, vorzugsweise bei einer Temperatur von 0 bis 100 °C, durchgeführt. Die Umsetzung wird vorzugsweise unter Atmosphären-Druck vorgenommen. Sie kann aber auch unter erhöhtem oder vermindertem Druck durchgeführt werden.

Als Thiophosphorsäurehalogenide der Formel IV kommen beispielsweise O-Ethyl-S-2-methoxyethylphosphorylchlorid, O-Ethyl-S-2-ethoxyethylphosphorylchlorid, O-Ethyl-S-2-isopropoxy-phosphorylchlorid in Betracht.

Beispiel für Salze der Formel V sind Natrium-N-methylmethansulfonamid, Natrium-N-methylethansulfonamid, Natrium-N-methyl-isopropansulfonamid, Natrium-N-methyldimethylsulfamylamid, Natrium-N-isopropyldimethylsulfamylamid und die entsprechenden Kaliumsalze.

Die Verfahrensvariante b) kann durch folgendes Reaktionsschema dargestellt werden :

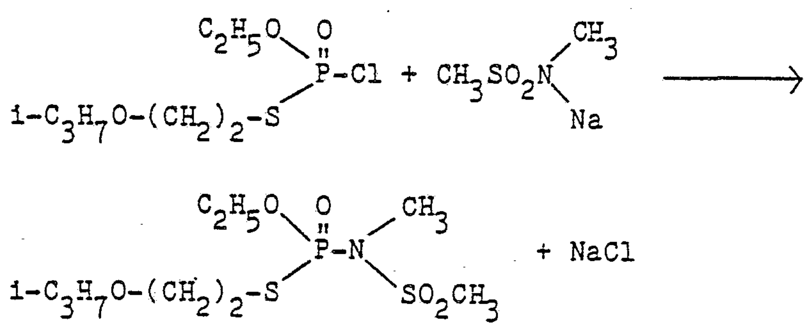

Die Verfahrensvariante b) wird vorzugsweise in Gegenwart eines inerten Lösungs- oder Verdünnungsmittels durchgeführt. Die für die Verfahrensvariante a) in Betracht kommenden Lösungsmittels können auch hier verwendet werden, um das gewünschte Produkt mit hohem Reinheitsgrad und guter Ausbeute zu erhalten.

Die Umsetzung gemäß b) kann innerhalb eines weiten Temperaturbereichs durchgeführt werden. Im allgemeinen wird sie innerhalb eines Temperaturbereichs von − 20 °C und dem Siedepunkt des Gemisches, vorzugsweise zwischen 0 und 100 °C, vorgenommen. Obgleich die Umsetzung zweckmäßigerweise unter Atmosphärendurck durchgeführt wird, kann sie auch unter erhöhtem oder vermindertem Druck durchgeführt werden.

Die Herstellung der Verbindungen der Formel I nach den Verfahrensvarianten a) und b) wird anhand der nachstehenden Herstellungsbeispiele erläutert.

## Herstellungsbeispiele

Verfahren a)

10,5 g Natrium-N-Methyl-methansulfonylamid werden in 70 ml Acetonitril suspendiert. 17,3 g O-Ethyl-S-2-isopropoxyethylthiophosphorylchlorid werden der Suspension bei Raumtemperatur zugetropft. Nach beendeter Zugabe wird das Gemisch 6 Stunden lang auf 82 °C erhitzt. Das Acetonitril wird abrotiert, der Rückstand mit Toluol vermischt, mit Wasser und 2 n Natronlauge gewaschen und über wasserfreiem Natriumsulfat getrocknet. Dann werden das Lösungsmittel und flüchtige Verunreinigungen unter vermindertem Druck bei 40 °C und 1 mbar entfernt. Man erhält als Rückstand 14,3 g O-Ethyl-S-2-isopropoxyethyl-N-methyl-N-methansulfonylphosphoramidothiolat ($n_D^{23} = 1{,}4859$) in Form eines schwach gelben Öls.

Verfahren b)

4,48 g Kaliumhydroxid werden in 100 ml Ethanol gelöst, dann wird gasförmiger Schwefelwasserstoff bei Raumtemperatur durch die Lösung geleitet. Zu der entstandenen Kaliumhydrogensulfidlösung werden 20,88 g O,O-Diethyl-N-methyl-N-methansulfonylphosphoramidothioat zugetropft, und das Gemisch wird 4 Stunden lang auf 70 °C erhitzt. Bei 50 °C werden 15,03 g 2-Isopropoxyethylbromid zu dem Gemisch zugetropft, das dann 6 Stunden lang unter Rühren auf 70 °C erhitzt wird. Das Lösungsmittel und die niedrigsiedenden Substanzen werden abrotiert, der Rückstand wird dann, wie unter a) beschrieben, aufgearbeitet. Man erhält 13,7 g O-Ethyl-S-2-isopropoxyethyl-N-methyl-N-methan-sulfonylphosphoramidothiolat ($n_D^{23}$ = 1,4860) in Form eines schwach gelben Öls.

Folgende Verbindungen lassen sich beispielsweise nach einem der oben beschriebenen Verfahren herstellen :

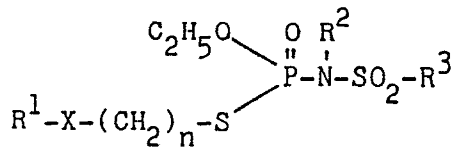

| Nr. | $R^1$ | $R^2$ | $R^3$ | X | n | $n_D$ |
|---|---|---|---|---|---|---|
| 1 | $CH_3$ | $CH_3$ | $CH_3$ | O | 2 | $n_D^{28}$ = 1,4940 |
| 2 | $C_2H_5$ | " | " | O | 2 | $n_D^{22}$ = 1,4902 |
| 3 | $i\text{-}C_3H_7$ | " | " | O | 2 | $n_D^{23}$ = 1,4860 |
| 4 | $CH_3$ | " | $N(CH_3)_2$ | O | 2 | $n_D^{22}$ = 1,4910 |
| 5 | $C_2H_5$ | " | " | O | 2 | $n_D^{25}$ = 1,4841 |
| 6 | $i\text{-}C_3H_7$ | " | " | O | 2 | $n_D^{25}$ = 1,4805 |
| 7 | $CH_3$ | " | $C_2H_5$ | O | 2 | $n_D^{21}$ = 1,4871 |
| 8 | $C_2H_5$ | " | " | O | 2 | $n_D^{21}$ = 1,4861 |
| 9 | $i\text{-}C_3H_7$ | " | " | O | 2 | $n_D^{21}$ = 1,4850 |
| 10 | $CH_3$ | $i\text{-}C_3H_7$ | $N(CH_3)_2$ | O | 2 | $n_D^{21}$ = 1,4867 |
| 11 | $C_2H_5$ | " | " | O | 2 | $n_D^{23}$ = 1,4817 |
| 12 | $i\text{-}C_3H_7$ | " | " | O | 2 | $n_D^{21}$ = 1,4822 |
| 13 | $CH_3$ | $CH_3$ | $CH_3$ | S | 1 | |
| 14 | " | $C_2H_5$ | " | S | 1 | |
| 15 | " | $i\text{-}C_3H_7$ | " | S | 1 | |
| 16 | " | $CH_3$ | $C_2H_5$ | S | 1 | |
| 17 | " | $CH_3$ | $N(CH_3)_2$ | S | 1 | |
| 18 | $C_2H_5$ | $CH_3$ | $CH_3$ | S | 1 | |
| 19 | " | $C_2H_5$ | " | S | 1 | |
| 20 | " | $i\text{-}C_3H_7$ | " | S | 1 | |
| 21 | " | $CH_3$ | $C_2H_5$ | S | 1 | |
| 22 | " | $CH_3$ | $N(CH_3)_2$ | S | 1 | |
| 23 | $CH_3$ | $CH_3$ | $CH_3$ | S | 2 | |
| 24 | " | $C_2H_5$ | " | S | 2 | |
| 25 | " | $i\text{-}C_3H_7$ | " | S | 2 | |
| 26 | " | $CH_3$ | $C_2H_5$ | S | 2 | |
| 27 | " | $CH_3$ | $N(CH_3)_2$ | S | 2 | |
| 28 | " | $i\text{-}C_3H_7$ | " | S | 2 | |

(Fortsetzung)

| Nr. | $R^1$ | $R^2$ | $R^3$ | X | n | $n_D$ |
|---|---|---|---|---|---|---|
| 29 | $C_2H_5$ | $CH_3$ | $CH_3$ | S | 2 | |
| 30 | " | $C_2H_5$ | " | S | 2 | |
| 31 | " | $i-C_3H_7$ | " | S | 2 | |
| 32 | " | $CH_3$ | $C_2H_5$ | S | 2 | |
| 33 | " | $CH_3$ | $N(CH_3)_2$ | S | 2 | |
| 34 | " | $C_2H_5$ | " | S | 2 | |
| 35 | " | $i-C_3H_7$ | " | S | 2 | |
| 36 | $i-C_3H_7$ | $CH_3$ | $CH_3$ | S | 2 | |
| 37 | " | $CH_3$ | $C_2H_5$ | S | 2 | |
| 38 | $i-C_3H_7$ | $CH_3$ | $N(CH_3)_2$ | S | 2 | |
| 39 | $CH_3$ | $C_2H_5$ | $CH_3$ | O | 2 | |
| 40 | " | $i-C_3H_7$ | $CH_3$ | O | 2 | |
| 41 | " | $C_2H_5$ | $C_2H_5$ | O | 2 | |
| 42 | " | $i-C_3H_7$ | $C_2H_5$ | O | 2 | |
| 43 | " | $CH_3$ | $i-C_3H_7$ | O | 2 | |
| 44 | " | $C_2H_5$ | $N(CH_3)_2$ | O | 2 | |
| 45 | " | $CH_3$ | $N(C_2H_5)_2$ | O | 2 | |
| 46 | " | $CH_3$ | $N(i-C_3H_7)_2$ | O | 2 | |
| 47 | $C_2H_5$ | $C_2H_5$ | $CH_3$ | O | 2 | |
| 48 | " | $i-C_3H_7$ | $CH_3$ | O | 2 | |
| 49 | " | $C_2H_5$ | $C_2H_5$ | O | 2 | |
| 50 | " | $i-C_3H_7$ | $C_2H_5$ | O | 2 | |
| 51 | " | $CH_3$ | $n-C_3H_7$ | O | 2 | |
| 52 | " | $CH_3$ | $i-C_3H_7$ | O | 2 | |
| 53 | " | $C_2H_5$ | $i-C_3H_7$ | O | 2 | |
| 54 | " | $i-C_3H_7$ | $i-C_3H_7$ | O | 2 | |
| 55 | | $C_2H_5$ | $N(CH_3)_2$ | O | 2 | |
| 56 | | $CH_3$ | $N(CH_3)_2$ | O | 2 | |
| 57 | | $CH_3$ | $N(i-C_3H_7)_2$ | O | 2 | |
| 58 | $i-C_3H_7$ | $C_2H_5$ | $CH_3$ | O | 2 | |
| 59 | $i-C_3H_7$ | $i-C_3H_7$ | $CH_3$ | O | 2 | |
| 60 | " | $n-C_3H_7$ | $CH_3$ | O | 2 | |
| 61 | " | $C_2H_5$ | $C_2H_5$ | O | 2 | |
| 62 | " | $i-C_3H_7$ | $C_2H_5$ | O | 2 | |
| 63 | " | $CH_3$ | $n-C_3H_7$ | O | 2 | |
| 64 | " | " | $i-C_3H_7$ | O | 2 | |
| 65 | " | " | $N(CH_3)_2$ | O | 2 | |
| 66 | " | " | $N(i-C_3H_7)_2$ | O | 2 | |

Die erfindungsgemäßen N-sulfonylierten Thiolphosphoresteramide der Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria Mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarus (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling) ;

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agriotes obscurus (Humusschnellkäfer), Agrilus sinuatus (Birnbaum-Prachtkäfer), Meligethes aeneus (Rapsglanzkäfer), Atomaria linearis (Moosknopfkäler), Epilachna varivestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner) ;

aus der Ordnung der Zweiflügler (Diptera) beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ocis, Chrysomya macellaria, Chrysomya hominivorax, Lucilia cuprina, Lucilia sericata, Hypoderma lineata ;

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), atta sexdens (Blattschneiderameise) ;

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysercus intermedius (Baumwollwanze), Piesma quadrata (Rübenwanze), Lygus pratensis (Gemeine Wiesenwanze) ;

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon

onobrychis (Grüne Erbsenlaus), Macrosiphon rosae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus) ;

aus der Ordnung der Termiten (Isoptera) beispielsweise Reticulitermes lucifugus, Calotermes flavicollis, Leucotermes flavipes, Termes natalensis ;

aus der Ordnung der Geradflüger (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melano plus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Arachnoidea gehören Spinnentiere (Acarina), beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennemathoden, z. B. Meloidogyne incognita, Meloidogyne hapla, Meloidogyne javanica, Zysten bildende Nematoden, z. B. Heterodera rostochiensis, Heterodera schachtii, Heterodera avenae, Heterodera glycines, Heterodera triflolii, Stock- und Blattälchen, z. B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in form ihrer Formulierungen oder den daraus bereiteten Anwendungsmöglichkeiten, z. B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsufonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind :

I. 3 Gewichtsteile der Verbindung Nr. 1 werden mit 97 Gewichtsteilen feinteiligem Kaolin innig vermischt. Man erhält auf diese Weise ein Stäubemittel, das 3 Gew.% des Wirkstoffs enthält.

II. 30 Gewichsteile der Verbindung Nr. 10 werden mit einer Mischung aus 92 Gewichtsteilen pulverförmigen Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 10 Gewichtsteile der Verbindung Nr. 12 werden in einer Mischung gelöst, die aus 90 Gewichtsteilen Xylol, 6 Gewichtsteilen des Anlagerungsproduktes von 8 bis 10 Mol Äthylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht.

IV. 20 Gewichtsteile der Verbindung Nr. 8 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

V. 80 Gewichtsteile der Verbindung Nr. 3 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden.

Im allgemeinen liegen sie zwischen 0,000 1 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,2 bis 10, vorzugsweise 0,5 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden :

1,2-Dibrom-3-chlorpropan, 1,3-Dichlorpropen, 1,3-Dichlorpropen + 1,2-Dichlorpropan, 1,2-Dibromethan, 2-sec.-Butylphenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Natphtyl-N-methylcarbamat, 2,3-Dihydro-2,2-dimethylbenzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)oxy]-1-thiooxamidat, N-(2-Methyl-chlor-phenyl)-N',N'-dimethylformamidin, Tetrachlorthiophen, 1-(2,6-Difluor-benzoyl)-3-(4-chlor-phenyl)-harnstoff, O,O-Dimethyl-O-(p-nitrophenyl)-phosphorthioat, O,O-Diethyl-O-(p-nitrophenyl)-phosphorthioat, O-Ethyl-O-(p-nitrophenyl)-phenyl-phosphonothioat, O,O-Dimethyl-O-(3-methyl-4-nitrophenyl)-phosphorthioat, O,O-Diethyl-O-(2,4-dichlorphenyl)-phosphorthioat, O-Ethyl-O-(2,4)dichlorphenyl)-phenyl-phosphonothioat, O,O-Dimethyl-O-(2,4,5-trichlorphenyl)-phosphorthioat, O-Ethyl-O-(2,4,5-trichlorphenyl)-ethyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Ethyl-O-(3-methyl-4-methylthiophenyl)-isopropylphosphoramidat, O,O-Diethyl-O-[p-methylsulfinyl-phenyl]-phosphorthioat, O-Ethyl-S-phenyl-ethyl-hosphonodithioat, O,O-Diethyl-[2-chlor-1-(2,4-dichlorphenyl)-vinyl]-phosphat, O,O-Dimethyl-[-2-chlor-1-(2,4,5-trichlorphenyl)]-vinylphosphat, O,O-Dimethyl-S-(1'-phenyl)-ethylacetat-phosphordithioat, Bis-(dimethylamino)-fluorphosphinoxid, Octamethyl-pyrophosphoramid, O,O,O,O-Tetraethyldithio-pyrophosphat, S-Chlormethyl-O,O-diethyl-phosphordithioat, O-Ethyl-S,S-dipropyl-phosphordithioat, O,O-Dimethyl-O,2,2-dichlorvinyl-phosphat, O,O-Dimethyl-1,2-dibrom-2,2-dichlorethylphosphat, O,O-Dimethyl-2,2,2-trichlor-1-hydroxyethyl-phosphonat, O,O-Dimethyl-S-[1,2-biscarbethoxy-ethyl-(1)]-phosphordithioat, O,O-Dimethyl-O-(1-methyl-2-carbmethoxy-vinyl)-phosphat, O,O-Dimethyl-S-(N-methy-carbamoyl-methyl)-phosphordithioat, O,O-Dimethyl-S-(N-methylcarbamoyl-methyl)-phosphorthioat, O,O-Dimethyl-S-(N-methoxyethyl-carbamoyl-methyl)-phosphordithioat, O,O-Dimethyl-S-(N-formyl-N-methyl-carbamoylmethyl)-phosphordithioat, O,O-Dimethyl-O-[1-methyl-2-(methyl-carbamoyl)-vinyl]-phosphat, O,O-Dimethyl-O-[(1-methyl-2-dimethylcarbamoyl)-vinyl]-phosphat, O,O-Dimethyl-O-[(1-methyl-2-chlor-2-diethylcarbamoyl)-vinyl]-phosphat, O,O-Diethyl-S-(ethylthio-methyl)-phosphordithioat, O,O-Diethyl-S-[(p-chlorphenylthio)-methyl]-phosphordithioat, O,O-Dimethyl-S-(2-ethylthioethyl)-phosphorthioat, O,O-Dimethyl-S-(2-ethylthioethyl)-phosphordithioat, O,O-Dimethyl-S-(2-ethylsulfinyl-ethyl)-phosphorthioat, O,O-Diethyl-S-(2-ethylthioethyl)-phosphordithioat, O,O-Diethyl-S-(2-ethylsulfinylethyl)-phosphorthioat, O,O-Diethyl-thiophosphorylimi-

nophenyl-acetonitril, O,O-Diethyl-S-(2-chlor-1-phthalimidoethyl)-phosphordithioat, O,O-Diethyl-S-[6-chlor-benzoxazolon-(2)-yl(3)]-methyldithiophosphat, O,O-Dimethyl-S-[2-methoxy-1,3,4-thiadiazol-5-[4H]-onyl-(4)-methyl]-phosphordithioat, O,O-Diethyl-O-[3,5,6-trichlor-pyridyl-(2)]-phosphorthioat, O,O-Diethyl-O-(2-pyrazinyl)-phosphorthioat, O,O-Diethyl-O[2-isopropyl-4-methyl-pyrimidinyl(6)]-phosphorthioat, O,O-Diethyl-O-[2-(diethylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diethyl-(1-phenyl-1,2,4-triazol-3-yl)-thionophosphat, O,S-Dimethyl-phosphor-amido-thioat, O,S-Dimethyl-N-acetyl-phosphoramidothioat, γ-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis-, trans-chrysanthemat, 5-Benzyl-furyl-(3)-methyl-DL-cis-, trans-chrysanthemat, 3-Phenoxybenzyl(±)-cis, trans-2,2-dimethyl-3-(2,2-dichlorvinyl)-cyclopropancarboxylat, α-Cyano-3-phenoxybenzyl(±)-cis, trans-2,2-dimethyl-3-(2,2-dichlorvinyl)-cyclopropancarboxylat, (s)-α-Cyano-3-phenoxybenzyl-cis(1R, 3R)-2,2-dimethyl-3-(2,2-dibromvinyl)-cyclopropancarboxylat, 3,4,5,6-Tetrahydrophthalimidoethyl-DL-cis, trans-chrysanthemat, 2-Methyl-5-(2-propinyl)-3-furylmethyl-chrysanthemat, (α-Cyano-3-phenoxybenzyl)-α-isopropyl-4-chlorphenylacetat.

Die folgenden Beispiele belegen die biologische Wirkung der neuen Verbindungen. Vergleichsmittel ist der bekannte Wirkstoff O-Ethyl-S-n-propyl-N-methyl-N-methansulfonylphosphoramidothiolat (DE-OS 26 42 054).

Die Numerierung der Wirkstoffe entspricht der der tabellarischen Auflistung.

Beispiel 1

Zuchtversuch mit Mittelmeerfruchtfliegen (Ceratitis capitata)

Die Versuche werden in 100 ml-Plastik-Bechern, die mit 40 g eines Nährbodens aus Karottenpulver und Wasser (1 : 3) mit Hefezusatz gefüllt sind, durchgeführt. Der Wirkstoff wird als wäßrige Aufbereitung in den fertigen Brei eingerührt, und dieser wird mit 100 bis 200 frischen Eiern beimpft. Die Becher werden bei 24 bis 26 °C geschlossen aufbewahrt ; nach ca. einer Woche kann die Entwicklung beurteilt werden.

In diesem Test zeigen die Wirkstoffe Nr. 1, 2, 3, 5, 6 eine gute Wirkung.

Beispiel 2

Fraß- und Kontaktwirkung auf raupen der Kohlschabe (Plutella maculipennis)

Blätter von jungen Kohlpflanzen werden 3 Sekunden lang in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt. Nach 48 Stunden beurteilt man die Wirkung.

Bei diesem Test zeigen z. B. die Wirkstoffe Nr. 1,2,3 eine bessere Wirkung als das Vergleichsmittel.

Beispiel 3

Kontaktwirkung auf Schaben (Blatta orientalis)

Der Boden eines 1 1-Einmachglases wird mit der acetonischen Lösung des Wirkstoffs behandelt. Nach dem Verdunsten des Lösungsmitels setzt man je Glas 5 adulte Schaben. Die Mortalitätsrate wird nach 48 Stunden bestimmt.

In diesem Test zeigen die Wirkstoffe Nr. 1,2,3,4,5,6 eine ausgezeichnete Wirkung.

Beispiel 4

Kontaktwirkung auf Zecken (Ornithodorus moubata)

Geprüft wird mit Zecken im 3. Larvenstadium. Dazu taucht man die Tiere, die sich in einem Papierbeutel befinden, für 3 Sekunden in die Prüfemulsion. Die Beutel werden frei aufgehängt. Nach 48 Stunden wird die Wirkung auf die Zecken beurteilt.

In diesem Test zeigen die Wirkstoffe Nr. 1,2,3,6 eine bessere Wirkung als das Vergleichsmittel.

Beispiel 5

Kontaktwirkung auf Blattläuse (Aphis fabae) ; Spritzversuch

Getopfte Bohnenpflanzen (Vicia faba) mit starken Blattlauskolonien werden in einer Spritzkammer

mit wäßrigen Wirkstoffaufbereitungen tropfnaß gespritzt. Die Auswertung erfolgt nach 24 Stunden.
In diesem Test zeigen die Wirkstoffe Nr. 1, 2, 3, 5, 6 eine gute Wirkung.

Beispiel 6

Kontaktwirkung auf Baumwollwanzen (Dysdercus intermedius)

Petrischalen von 10 cm Durchmesser werden mit 1 ml acetonischer Wirkstofflösung ausgekleidet. Nach dem Verdunsten des Lösungsmittels besetzt man die Schalen mit je 20 Larven des vorletzten Stadiums und registriet die Wirkung nach 24 Stunden.
In diesem Test zeigen die Wirkstoffe Nr. 1, 2, 3, 4, 5, 6 eine gute Wirkung.

Beispiel 7

Wirkung auf Eiablagen der Kohlschabe (Plutella maculipennis)

Junge Kohlpflanzen mit 2 bis 3 Blattpaaren, die eine starke Eiablage der Kohlschabe tragen, werden mit der wäßrigen Wirkstoffemulsion tropfnaß gespritzt.
Die Pflanzen werden darauf unter Gewächshausbedingungen gehalten und der Fraß der geschlüpften raupen wird beobachtet.
In diesem Test zeigen die Wirkstoffe Nr. 1, 2, 3, 4, 5 eine gute Wirkung.

Beispiel 8

Kontaktwirkung auf Chagas-Wanzen (Rhodnius prolixus)

Petrischalen von 10 cm Durchmesser werden mit 1 ml der acetonischen Wirkstofflösungen ausgekleidet. Nach dem Verdunsten des Lösungsmittels belegt man die Schalen mit je 10 adulten Wanzen.
Die Wirkung wird nach 24 Stunden beurteilt.
In diesem Test zeigen die Wirkstoffe Nr. 2 und 3 eine bessere Wirkung als das Vergleichsmittel.

Beispiel 9

Wirkung auf Spinnmilben (Tetranychus telarius)

Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen kommen dazu auf einen Drehteller und werden von allen Seiten mit 50 ml Spritzbrühe besprüht. Der Sprühvorgang dauert ca. 22 Sekunden.
Nach 8 Tagen werden die Pflanzen auf lebende Spinnmilben untersucht.
In diesem Test zeigen die Wirkstoffe Nr. 1, 2, 3, 5, 6 eine bessere Wirkung als das Vergleichsmittel.

Beispiel 10

Wirkung auf Wurzelgallennematoden (Meloidogyne incognita) an Tomaten

300 g Gartenerde, die stark mit Meloidogyne incognita infiziert ist, werden mit 30 ml der wäßrigen Wirkstoffaufbereitung innig vermischt. Die Erde wird darauf in Plastiktöpfe gefüllt und mit einem Tomatensetzling bepflanzt.
Nach 8 Wochen werden die Wurzeln auf Gallenbildung untersucht.
In diesem Test zeigen die Wirkstoffe Nr. 1, 2, 3, 4, 6 eine sehr gute Wirkung.

**Patentansprüche**

1. N-sulfonylierte Thiolphosphoresteramide der Formel

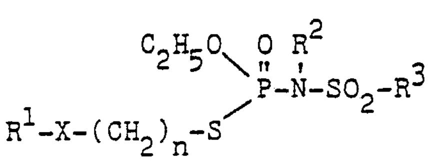

(I)

in der

$R^1$ Alkyl mit 1 bis 3 Kohlenstoffatomen,
$R^2$ Alkyl oder Alkenyl mit bis zu 6 Kohlenstoffatomen,
$R^3$ Alkyl oder Halogenalkyl mit 1 bis 6 Kohlenstoffatomen oder Dialkylamino mit 1 bis 6 Kohlenstoffatomen in einer Alkylgruppe,
X Sauerstoff oder Schwefel und
n 1 oder 2 bedeuten.

2. O-Ethyl-S-(2-methoxy-ethyl)-N-methyl-N-methan-sulfonyl-phosphoramidothiolat.

3. O-Ethyl-S-(2-ethoxy-ethyl)-N-methyl-N-methan-sulfonyl-phosphoramidothiolat.

4. O-Ethyl-S-(2-isopropoxy-ethyl)-N-methyl-N-methansulfonylphosphoramidothiolat.

5. Verfahren zur Herstellung von N-sulfonylierten Thiolphosphoresteramiden der Formel I gemäß Anspruch 1, dadurch gekennzeichnet, daß man

a) ein Phosphoramidothioatsalz der Formel

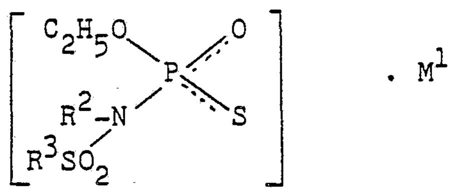

(II)

in der
$R^2$ und $R^3$ die im Anspruch 1 genannten Bedeutungen haben und
$M^1$ ein Alkalimetallion oder eine Ammoniumgruppe bedeutet,
mit einem Alkylierungsmittel der Formel

$$R^1—X—(CH_2)_n—Y \qquad \text{(III)}$$

in der
$R^1$, X und n die im Anspruch 1 genannten Bedeutungen haben und
Y Halogen oder eine Sulfonsäuregruppe bedeutet,
umsetzt, oder

b) ein Thiophosphorylhalogenid der Formel

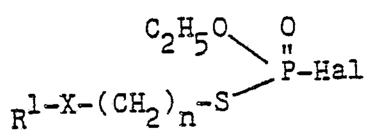

(IV)

in der
$R^1$ die im Anspruch 1 genannte bedeutung hat und Hal Halogen bedeutet,
mit einem Sulfonylamidsalz der Formel

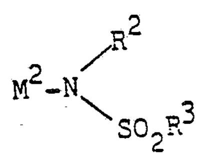

(V)

in der
$R^2$ und $R^3$ die im Anspruch 1 genannten Bedeutungen haben und
$M^2$ ein Alkalimetall ist,
umsetzt.

6. Insektizides, akarizides und nematizides Mittel, enthaltend inerte Zusatzstoffe und ein N-sulfonyliertes Thiolphosphoresteramid der Formel

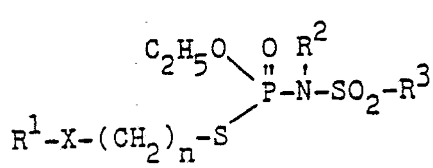

(I)

in der
$R^1$ Alkyl mit 1 bis 3 Kohlenstoffatomen,

$R^2$ Alkyl oder Alkenyl mit bis zu 6 Kohlenstoffatomen,

$R^3$ Alkyl oder Halogenalkyl mit 1 bis 6 Kohlenstoffatomen oder Dialkylamino mit 1 bis 6 Kohlenstoffatomen in einer Alkylgruppe,

X Sauerstoff oder Schwefel und

n 1 oder 2 bedeuten,

als Wirkstoff.

7. Insektizides, akarizides und nematizides Mittel, enthaltend inerte Zusatzstoffe und O-Ethyl-S-(2-methoxyethyl)-N-methyl-N-methan-sulfonylphosphoramidothiolat als Wirkstoff.

8. Insektizides, akarizides und nematizides Mittel, enthaltend inerte Zusatzstoffe und O-Ethyl-S-(2-ethoxyethyl)-N-methyl-N-methan-sulfonylphosphoramidothiolat als Wirkstoff.

9. Insektizides, akarizides und nematizides Mittel, enthaltend inerte Zusatzstoffe und O-Ethyl-S-(2-isopropoxy-ethyl)-N-methyl-N-methan-sulfonylphosphoramidothiolat als Wirkstoff.

10. Verfahren zur Bekämpfung von Insekten, Spinnentieren und/oder Nematoden, dadurch gekennzeichnet, daß man eine wirksame Menge eines N-sulfonylierten Thiolphosphoresteramids der Formel I gemäß Anspruch 1 auf diese und/oder deren Lebensraum einwirken läßt.

**Claims**

1. An N-sulfonylated thiolphosphoric ester amide of the formula

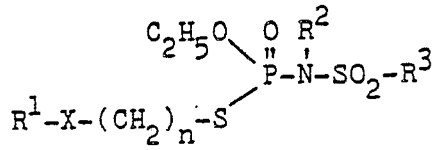

(I)

where

$R^1$ is alkyl of 1 to 3 carbon atoms,

$R^2$ is alkyl or alkenyl of up to 6 carbon atoms,

$R^3$ is alkyl or haloalkyl of 1 to 6 carbon atoms or dialkylamino where alkyl is of 1 to 6 carbon atoms,

X is oxygen or sulfur, and

n is 1 or 2.

2. O-Ethyl-S-(2-methoxy-ethyl)-N-methyl-N-methane-sulfonylphosphoramidothiolate.

3. O-Ethyl-S-(2-ethoxy-ethyl)-N-methyl-N-methane sulfonyl phosphoramidothiolate.

4. O-Ethyl-S-(2-isopropoxy-ethyl)-N-methyl-N-methane-sulfonyl phosphoramidothiolate.

5. A process for the preparation of an N-sulfonylated thiolphosphoric ester amide of the formula I as claimed in claim 1, wherein

a) phosphoramidothioate salt of the general formula

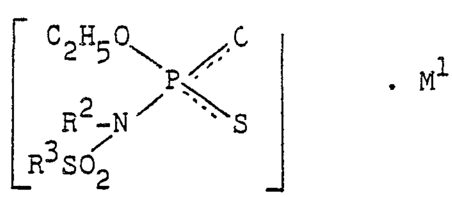

(II)

where

$R^2$ and $R^3$ have the meanings given in claim 1, and

$M^1$ is an alkali metal ion or an ammonium group,

is reacted with an alkylating agent of the formula

$$R^1—X—(CH_2)_n—Y \qquad (III)$$

where

$R^1$, X and n have the meanings given in claim 1, and

Y is halogen or a sulfonic acid group, or

b) a thiophosphoryl halide of the formula

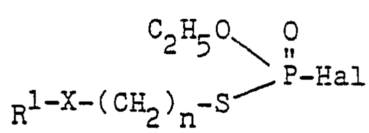

(IV)

where

$R^1$ has the meanings given in claim 1, and Hal is halogen, is reacted with a sulfonylamide salt of the formula

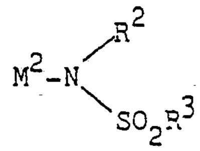

(V)

where

$R^2$ and $R^3$ have the meanings given in claim 1, and

$M^2$ is an alkali metal.

6. An insecticidal, acaricidal and nematicidal agent containing inert additives and, as active ingredient, an N-sulfonylated thiolphosphoric ester amide of the formula

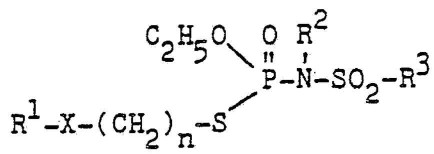

(I)

where

$R^1$ is alkyl of 1 to 3 carbon atoms,

$R^2$ is alkyl or alkenyl of up to 6 carbon atoms,

$R^3$ is alkyl or haloalkyl of 1 to 6 carbon atoms or dialkylamino where alkyl is of 1 to 6 carbon atoms,

X is oxygen or sulfur, and

n is 1 or 2.

7. An insecticidal, acaricidal and nematicidal agent containing inert additives and, as active ingredient, O-ethyl-S-(2-methoxy-ethyl)-N-methyl-N-methane-sulfonyl phosphoramidothiolate.

8. A insecticidal, acaricidal and nematicidal agent containing inert additives and, as active ingredient, O-ethyl-S-(2-ethoxy-ethyl)-N-methyl-N-methane-sulfonyl phosphoramidothiolate.

9. An insecticidal, acaricidal and nematicidal agent containing inert additives and, as active ingredient, O-ethyl-S-(2-isopropoxy-ethyl)-N-methyl-N-methane-sulfonyl phosphoramidothiolate.

10. A process for combating insects, arachnida and/or nematodes, wherein an effective amount of an N-sulfonylated thiolphosphoric ester amide of the formula I as claimed in claim 1 is allowed to act on them and/or their habitat.

**Revendications**

1. Thiolphosphoresteramide N-sulfonylé, de formule

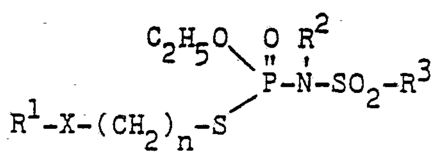

(I)

dans laquelle

$R^1$ représente alkyle à 1 à 3 atomes de carbone,

$R^2$ alkyle ou alcényle ayant jusqu'à 6 atomes de carbone,

$R^3$ alkyle ou halogénalkyle à 1 à 6 atomes de carbone, ou dialkylamino à 1 à 6 atomes de carbone dans un groupe alkyle,

X oxygène ou soufre et

n représente 1 ou 2.

2. O-éthyl-S-(2-méthoxy-éthyl)-N-méthyl-N-méthan-sulfonylphosphoramidothiolate.

3. O-éthyl-S-(2-éthoxy-éthyl)-N-méthyl-N-méthan-sulfonylphosphoramidothiolate.

4. O-éthyl-S-(2-isopropoxy-éthyl)-N-méthyl-N-méthan-sulfonylphosphoramidothiolate.

5. Procédé de préparation de thiolphosphoresteramides N-sulfonylés de formule I selon la revendication 1, caractérisé par le fait qu'on fait réagir

a) un sel de phosphoramidothioate de formule

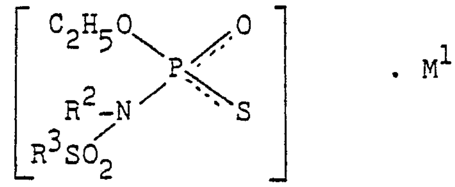 (II)

dans laquelle

$R^2$ et $R^3$ ont les significations indiquées dans la revendication 1, et

$M^1$ représente un ion métal alcalin ou un groupe ammonium, avec un agent d'alkylation de formule

$$R^1\text{—}X\text{—}(CH_2)_n\text{—}Y \qquad \text{(III)}$$

dans laquelle

$R^1$, X et n ont les significations indiquées dans la revendication 1 et

Y représente un halogène ou un groupe acide sulfonique, ou

b) un halogénure de thiophosphoryle de formule

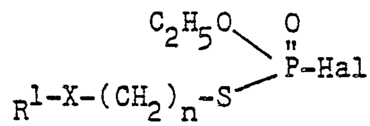 (IV)

dans laquelle

$R^1$ a la signification donnée à la revendication 1 et Hal représente halogène,

avec un sel de sulfonylamide de formule

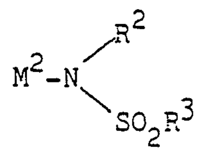 (V)

dans laquelle

$R^2$ et $R^3$ ont les significations données dans la revendication 1 et

$M^2$ est un métal alcalin.

6. Insecticide, acaricide et nématicide, contenant des additifs inertes et, comme principe actif, un thiolphosphoresteramide N-sulfonylé de formule

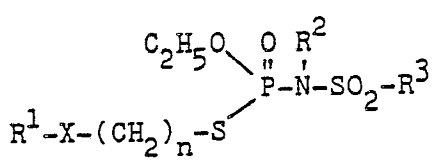 (I)

dans laquelle

$R^1$ représente alkyle à 1 à 3 atomes de carbone,

$R^2$ alkyle ou alcényle ayant jusqu'à 6 atomes de carbone,

$R^3$ alkyle ou halogénalkyle à 1 à 6 atomes de carbone, ou dialkylamino à 1 à 6 atomes de carbone dans un groupe alkyle,

X oxygène ou soufre et

n représente 1 ou 2.

7. Insecticide, acaricide et nématicide, contenant des additifs inertes et, comme principe actif, O-éthyl-S-(2-méthoxy-éthyl)-N-méthyl-N-méthan-sulfonylphosphoramidothiolate.

8. Insecticide, acaricide et nématicide, contenant des additifs inertes et, comme principe actif, O-éthyl-S-(2-éthoxy-éthyl)-N-méthyl-N-méthan-sulfonylphosphoramidothiolate.

9. Insecticide, acaricide et nématicide, contenant des additifs inertes et, comme principe actif, O-éthyl-S-(2-isopropoxy-éthyl)-N-méthyl-N-méthan-sulfonylphosphoramidothiolate.

10. Procédé pour lutter contre les insectes, arachnides et/ou nématodes, caractérisé par le fait que l'on fait agir sur eux et/ou leur biotope, une quantité efficace d'un thiolphosphoresteramide N-sulfonylé de formule I selon la revendication 1.